# EUROPÄISCHE PATENTANMELDUNG

(11) **EP 3 075 585 A1**
(43) Veröffentlichungstag der Anmeldung: **05.10.2016**
(21) Anmeldenummer: 16160335.2
(22) Anmeldetag: 15.03.2016
(51) Int. Cl.: B60J 5/04, B60Q 1/32, B60Q 1/26, B60R 13/02, B60R 11/00

(54) **FUNKTIONSANORDNUNG FÜR EINE KRAFTFAHRZEUGTÜR**

(30) Priorität: 01.04.2015 DE 102015105063
(71) Anmelder: Brose Schliesssysteme GmbH & Co. KG, 42369 Wuppertal (DE)
(72) Erfinder: Leve, Dirk, 41470 Neuss (DE); Heck, Daniel, 42369 Wuppertal (DE)
(74) Vertreter: Gottschald, Jan

(57) **Zusammenfassung**

Die Erfindung betrifft eine Funktionsanordnung für eine Kraftfahrzeugtür (2), mit einem Abdeckteil (5) zum Verschließen einer Werkzeugzugangsöffnung (6) in der Kraftfahrzeugtür (2), wobei das Abdeckteil (5) eine Beleuchtungseinheit (9) und einen Anschlussstecker (10) zur Energieversorgung der Beleuchtungseinheit (9) aufweist. Es wird vorgeschlagen, dass ein Versorgungsteil (11) mit einem Gegenanschlussstecker (12) vorgesehen ist und wobei das Versorgungsteil (11) in seinem montierten Zustand hinsichtlich seiner Lage zu der Werkzeugzugangsöffnung (6) festgelegt ist und das Verschließen der Werkzeugzugangsöffnung (6) mit der Herstellung einer Steckverbindung (13) zwischen dem Anschlussstecker (10) des Abdeckteils (5) und dem Gegenanschlussstecker (12) des festgelegten Versorgungsteils (11) einhergeht und dadurch die Beleuchtungseinheit (9) über das Versorgungsteil (11) mit Energie versorgbar ist.

## Beschreibung

Die Erfindung betrifft eine Funktionsanordnung für eine Kraftfahrzeugtür gemäß Anspruch 1, einen Multifunktionsträger gemäß Anspruch 8, eine Kraftfahrzeugtür gemäß Anspruch 10 sowie ein Verfahren zur Montage einer Funktionsanordnung gemäß Anspruch 15.

Die in Rede stehende Funktionsanordnung dient der Beleuchtung eines Umgebungsbereichs der Kraftfahrzeugtür oder der Beleuchtung eines Teils der Kraftfahrzeugtür selbst. Eine solche Funktionsanordnung kann beispielsweise als Vorfeldbeleuchtung ausgestaltet sein, um für den Benutzer das Ein- oder Aussteigen komfortabler zu gestalten.

Heutige Kraftfahrzeugtüren sind regelmäßig mit Werkzeugzugangsöffnungen ausgestattet, in die Werkzeuge wie ein Schraubendreher einführbar sind, um Türkomponenten zu montieren. Bei einer solchen Türkomponente kann es sich beispielsweise um eine Türaußengriffanordnung handeln. Bei einer bekannten Türaußengriffanordnung (DE 10 2011 052 960 A1) ist ein schraubenartiges Befestigungselement zur Montage eines Teils der Türaußengriffanordnung, dort eines Schließzylinder-Gehäuses, vorgesehen. Das schraubenartige Befestigungselement ist regelmäßig über eine Werkzeugzugangsöffnung erreichbar, die sich an der Stirnseite der Kraftfahrzeugtür befindet. Die Stirnseite der Kraftfahrzeugtür ist hier eine Seite der Kraftfahrzeugtür, die sich bei geschlossener Kraftfahrzeugtür im Wesentlichen quer zu der Längsachse des Kraftfahrzeugs erstreckt.

Für die weiter oben angesprochene Funktionsanordnung ist regelmäßig eine zusätzliche Ausnehmung in der Stirnseite der Kraftfahrzeugtür vorgesehen. Dadurch lässt sich die Lage der Funktionsanordnung in einem weiten Bereich frei wählen. Allerdings ist der mit der zusätzlichen Ausnehmung verbundene herstellungstechnische Aufwand vergleichsweise hoch.

Der Erfindung liegt das Problem zugrunde, die bekannte Funktionsanordnung derart auszugestalten und weiterzubilden, dass der herstellungstechnische Aufwand für die Realisierung der Funktionsanordnung reduziert wird.

Das obige Problem wird bei der in Rede stehenden Funktionsanordnung durch die Merkmale von Anspruch 1 gelöst.

Wesentlich ist zunächst die Überlegung, dass eine Werkzeugzugangsöffnung in der Kraftfahrzeugtür nicht nur für das Einführen eines Werkzeugs, sondern auch für die Unterbringung einer in Rede stehenden Funktionsanordnung, genutzt werden kann. Im Einzelnen wird hierzu vorgeschlagen, dass ein Abdeckteil zum Verschließen der Werkzeugzugangsöffnung in der Kraftfahrzeugtür vorgesehen ist, das eine Beleuchtungseinheit und einen Anschlussstecker zur Energieversorgung der Beleuchtungseinheit aufweist.

Wesentlich ist weiter, dass ein Versorgungsteil mit einem Gegenanschlussstecker vorgesehen ist. Das Versorgungsteil ist in seinem montierten Zustand hinsichtlich seiner Lage zu der Werkzeugzugangsöffnung festgelegt, wobei das Verschließen der Werkzeugzugangsöffnung durch das Abdeckteil mit der Herstellung einer Steckverbindung zwischen dem Anschlussstecker des Abdeckteils und dem Gegenanschlussstecker des festgelegten Versorgungsteils einhergeht. Dadurch ist die dem Abdeckteil zugeordnete Beleuchtungseinheit über das Versorgungsteil mit Energie versorgbar. Die Festlegung des Versorgungsteils kann grundsätzlich nachgiebig vorgesehen sein. Die mechanische Stabilität muß nur insoweit gewährleistet sein, dass die vorschlagsgemäße Herstellung der Steckverbindung möglich ist.

Bei einer bevorzugten Variante gemäß Anspruch 2 weist das Versorgungsteil einen Trägerkörper für mindestens einen Energieleiter auf, wobei in einer bevorzugten Variante von Anspruch 2 der Energieleiter mindestens einen elektrischen Leiter aufweist. Durch die Ausstattung des Versorgungsteils mit einem Trägerkörper lässt sich das Versorgungsteil für zahlreiche zusätzliche Funktionen einsetzen.

Eine besonders bevorzugte Ausgestaltung gemäß Anspruch 3 sieht vor, dass der Trägerkörper des Versorgungsteils eine Führung für ein durch die Werkzeugzugangsöffnung hindurchragendes Werkzeug bereitstellt. Dabei ist der Trägerkörper vorzugsweise trichterförmig ausgestaltet, so dass unkoordinierte Werkzeugbewegungen "aufgefangen" werden, ohne dass umgebende Komponenten wie Bowdenzüge o. dgl. in Mitleidenschaft gezogen werden.

Die Steckverbindung zwischen Beleuchtungseinheit und Versorgungsteil, die über die oben genannten Anschlussstecker und Gegenanschlussstecker realisiert ist, befindet sich regelmäßig im Nassraum der Kraftfahrzeugtür. Entsprechend ist es gemäß Anspruch 4 vorzugsweise vorgesehen, dass die Steckverbindung eine wasserdichte Steckverbindung ist.

Mit der vorschlagsgemäßen Lösung lässt sich eine ohnehin vorhandene Werkzeugzugangsöffnung doppelt nutzen, nämlich einerseits für die Durchführung eines Werkzeugs wie eines Schraubendrehers, und andererseits für die Aufnahme zumindest eines Teils der Funktionsanordnung. Um den Zugang durch das Werkzeug nicht zu beeinträchtigen, ist es gemäß Anspruch 5 vorzugsweise vorgesehen, dass der Gegenanschlussstecker des Versorgungsteils im montierten Zustand im Randbereich der Werkzeugzugangsöffnung angeordnet ist. Damit ist gewährleistet, dass das Versorgungsteil den lichten Querschnitt der Werkzeugzugangsöffnung nicht reduziert.

Für die Festlegung des Versorgungsteils hinsichtlich seiner Lage zu der Werkzeugzugangsöffnung kann das Versorgungsteil grundsätzlich an der Werkzeugzugangsöffnung selbst befestigt sein. Gemäß Anspruch 6 wird vorgeschlagen, dass das Versorgungsteil hierfür einen Befestigungsabschnitt aufweist, der in Eingriff mit der Werkzeugzugangsöffnung steht. Andere Varianten für die Festlegung des Versorgungsteils sind denkbar.

Nach einer weiteren Lehre gemäß Anspruch 8, der eigenständige Bedeutung zukommt, wird ein Multifunktionsträger als solcher beansprucht. Ein solcher Multifunktionsträger trägt einen Türgriffmodul insbesondere in Form eines Lagerbügels, ein Schlossmodul und/oder ein Fensterhebermodul sowie ein Versorgungsteil einer vorschlagsgemäßen Funktionsanordnung. Vorteilhaft bei solchen Multifunktionsträgem ist die Tatsache, dass eine Vormontage der beschriebenen Türfunktionsmodule möglich ist, so dass der mit den Türfunktionsmodulen bestückte Multifunktionsträger bei der Endmontage als solcher in die Kraftfahrzeugtür einsetzbar ist. Die dem Multifunktionsträger zugeordneten Türfunktionsmodule sind vorzugsweise mit einem solchen Spiel an dem Multifunktionsträger angeordnet, dass sich deren genaue Lage im Rahmen der Endmontage feinjustieren lässt.

Nach einer weiteren Lehre gemäß Anspruch 10, der ebenfalls eigenständige Bedeutung zukommt, wird eine Kraftfahrzeugtür als solche beansprucht. Die vorschlagsgemäße Kraftfahrzeugtür weist eine Türgriffanordnung, eine Werkzeugzuführungsöffnung für die Montage der Türgriffanordnung und eine der Werkzeugzugangsöffnung zugeordnete, vorschlagsgemäße Funktionsanordnung auf. Auf alle Ausführungen zu der vorschlagsgemäßen Funktionsanordnung darf verwiesen werden.

Nach einer weiteren Lehre gemäß Anspruch 15, der ebenfalls eigenständige Bedeutung zukommt, wird ein Verfahren zur Montage einer vorschlagsgemäßen Funktionsanordnung beansprucht. Wesentlich nach dem Verfahren ist, dass mit dem Verschließen der Werkzeugzugangsöffnung durch das Abdeckteil gleichzeitig eine Steckverbindung zwischen dem Anschlussstecker des Abdeckteils und dem Gegenanschlussstecker des Versorgungsteils hergestellt wird. Damit ist einerseits ein besonders einfaches Verschließen der Werkzeugzugangsöffnung durch das Abdeckteil und andererseits eine besonders einfache Herstellung der Energieversorgung der Beleuchtungseinheit realisiert. Dabei ist es in besonders bevorzugter Ausgestaltung vorgesehen, dass vor dem Verschließen der Werkzeugzugangsöffnung mittels eines durch die Werkzeugzugangsöffnung eingeführten Werkzeugs eine Türgriffanordnung montiert wird (Anspruch 16).

Im Folgenden wird die Erfindung anhand einer lediglich ein Ausführungsbeispiel darstellenden Zeichnung näher erläutert. In der Zeichnung zeigt
- Fig. 1: eine vorschlagsgemäße Kraftfahrzeugtür mit einer vorschlagsgemäßen Funktionsanordnung in einer perspektivischen Darstellung,
- Fig. 2: die vorschlagsgemäße Funktionsanordnung gemäß Fig. 1 in einer Explosionsdarstellung,
- Fig. 3: die Kraftfahrzeugtür gemäß Fig. 1 in einer Schnittansicht entlang der Schnittlinie III-III in einer ersten Ausführungsform und
- Fig. 4: die Kraftfahrzeugtür gemäß Fig. 1 in einer Schnittansicht entlang der Schnittlinie III-III in einer zweiten Ausführungsform.

Die dargestellte Funktionsanordnung 1 ist einer Kraftfahrzeugtür 2 zugeordnet. Die Funktionsanordnung 1 übernimmt eine Beleuchtungsfunktion, die vorzugsweise auf die Beleuchtung der Umgebung der Kraftfahrzeugtür 2 oder der Kraftfahrzeugtür 2 selbst gerichtet ist. In einer weiteren bevorzugten Variante übernimmt die Funktionsanordnung 1 eine optische Warnfunktion für den Fall, dass die Kraftfahrzeugtür 2 geöffnet ist. Vorzugsweise befindet sich die Funktionsanordnung 1 im Bereich einer Stirnseite 3 der Kraftfahrzeugtür 2, also in einem Endbereich der Kraftfahrzeugtür 2, der im Wesentlichen quer zu einer Türaußenhaut 4 verläuft.

Die Funktionsanordnung 1 ist mit einem Abdeckteil 5 zum Verschließen einer Werkzeugzugangsöffnung 6 in der Kraftfahrzeugtür 2 ausgestattet. Die Werkzeugzugangsöffnung 6 dient hier dem Zugang eines Werkzeugs 7, insbesondere einem Schraubendreher, zu einem noch zu erläuternden Befestigungselement 8 im Rahmen der Montage der Kraftfahrzeugtür 2. Vorzugsweise folgt der Betätigung des Befestigungselements 8 mittels des Werkzeugs 7 durch die Werkzeugzugangsöffnung 6 hindurch ein Verschließen der Werkzeugzugangsöffnung 6 mittels des Abdeckteils 5.

Interessant ist die Tatsache, dass dem Abdeckteil 5 nicht nur eine Abdeckfunktion für die Werkzeugzugangsöffnung 6, sondern auch die oben angesprochene Beleuchtungsfunktion zukommt. Hierfür weist das Abdeckteil 5 eine Beleuchtungseinheit 9 und einen Anschlussstecker 10 zur Energieversorgung der Beleuchtungseinheit 9 auf.

Die Funktionsanordnung ist 1 weiter mit einem Versorgungsteil 11 ausgestattet, das mit einem Gegenanschlussstecker 12 versehen ist. Das Versorgungsteil 11 ist in noch zu erläuternder Weise in seinem montierten Zustand hinsichtlich seiner Lage zu der Werkzeugzugangsöffnung 6 festgelegt.

Das Verschließen der Werkzeugzugangsöffnung 6 durch das Abdeckteil 5 geht mit der Herstellung einer Steckverbindung 13 zwischen dem Anschlussstecker 10 des Abdeckteils 5 und dem Gegenanschlussstecker 12 des festgelegten Versorgungsteils 11 einher, so dass die Beleuchtungseinheit 9 über das Versorgungsteil 11 mit Energie versorgbar ist. Mit der Endmontage des Abdeckteils 5 geht also nicht nur die Abdeckung der Werkzeugzugangsöffnung 6, sondern auch die Herstellung der Steckverbindung 13 einher.

Grundsätzlich kann es vorgesehen sein, dass das Versorgungsteil 5 im Wesentlichen aus mindestens einem Energieleiter 14 besteht, der gleichzeitig die für das Zustandekommen der Steckverbindung 13 erforderliche, mechanische Stabilität aufweist. Hier und vorzugsweise ist es allerdings so, dass das Versorgungsteil 11 einen Trägerkörper 15 für mindestens einen Energieleiter 14 aufweist. Der Trägerkörper 15 ist vorzugsweise formstabil, insbesondere starr, ausgestaltet. Er kann in besonders bevorzugter Ausgestaltung als Kunststoff-Spritzgießteil ausgestaltet sein.

Bei dem mindestens einen Energieleiter 14 handelt es sich in der dargestellten und insoweit bevorzugten Alternative um einen elektrischen Leiter. Dabei ist die Beleuchtungseinheit 9 eine elektrische Beleuchtungseinheit 9, die vorzugsweise mit mindestens einem elektrischen Leuchtmittel, insbesondere einer Leuchtdiode, ausgestattet ist. Die Beleuchtungseinheit 9 ist ferner mit einer optischen Abstrahleinrichtung 9a, die sich im oder am Abdeckteil 5 befindet, ausgestattet. Die Abstrahleinrichtung 9a kann beispielsweise ein Lichtwellenleiter sein, der in das Abdeckteil 5 im Kunststoff-Spritzgießverfahren eingespritzt ist.

Alternativ und hier nicht dargestellt kann es insbesondere für die Anordnung der Beleuchtungseinheit 9 im Nassraum vorteilhaft sein, dass der Energieleiter 14 mindestens einen Lichtwellenleiter aufweist. Dann handelt es sich bei der Beleuchtungseinheit 9 vorzugsweise um ein passives optisches Element für das Ausstrahlen der über den Lichtwellenleiter zugeführten Lichtenergie, insbesondere um ein Linsensystem, ein Reflektorsystem o. dgl..

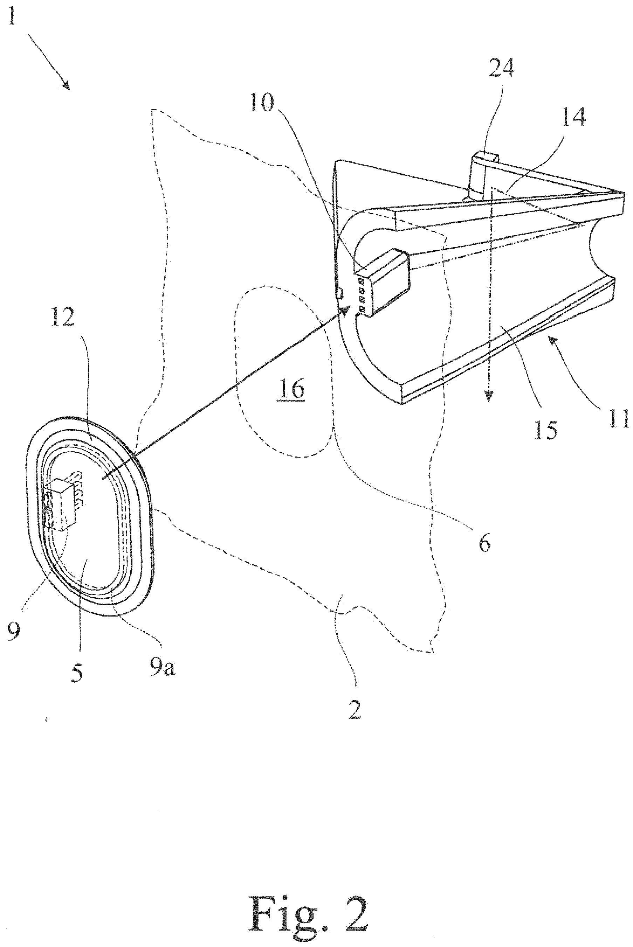

Der Trägerkörper 15 dient vorliegend nicht nur der Aufnahme des mindestens einen Energieleiters 14, sondern auch der Führung für ein durch die Werkzeugzugangsöffnung 6 hindurchragendes Werkzeug 7. Hierfür ist der Trägerkörper 15, wie in Fig. 2 dargestellt, vorteilhafterweise zumindest zum Teil trichterförmig ausgestaltet. Der zum Teil trichterförmige Trägerkörper ist im montierten Zustand so angeordnet, dass er auf das schraubenartige Befestigungselement 8 ausgerichtet ist. Dies bedeutet, dass das Versorgungsteil 11 ein längliches Werkzeug 7, das durch die Werkzeugzugangsöffnung 6 hindurchgeführt wird, auf das schraubenartige Befestigungselement 8 hin führt. Gleichzeitig verhindert das Versorgungsteil 11, dass umliegende Komponenten, insbesondere Bowdenzüge o. dgl., durch das Werkzeug 7 beschädigt werden.

Dadurch, dass die resultierende Steckverbindung 13 zwischen dem Anschlussstecker 10 des Abdeckteils 5 und dem Gegenanschlussstecker 12 des Versorgungsteils 11 im Nassraum angeordnet ist, handelt es sich bei der Steckverbindung 13 vorzugsweise um eine wasserdichte Steckverbindung. Hierbei ist zu berücksichtigen, dass die Wasserdichtigkeit der Steckverbindung 13 in unterschiedlichen Graduierungen vorgesehen sein kann. Diesbezüglich darf auf die hier einschlägigen Normen verwiesen werden.

Fig. 2 zeigt, dass der Gegenanschlussstecker 12 des Versorgungsteils 11 im montierten Zustand im Randbereich der Werkzeugzugangsöffnung 6 angeordnet ist. Bei dem dargestellten und insoweit bevorzugten Ausführungsbeispiel ragt der Gegenanschlussstecker 12 nur geringfügig in die Werkzeugzugangsöffnung 6 hinein, so dass die Zugänglichkeit des Befestigungselements 8 durch den Gegenanschlussstecker 12 kaum beeinträchtigt wird. In einer weiteren bevorzugten Ausgestaltung kann es sogar vorgesehen sein, dass der Gegenanschlussstecker 12 vollständig außerhalb der Werkzeugzugangsöffnung 6 angeordnet ist, wobei für die Herstellung der Steckverbindung 13 ggf. eine Montagebewegung, die einen Bewegungsanteil parallel zu der Werkzeugöffnungsfläche 16 aufweist, erforderlich ist.

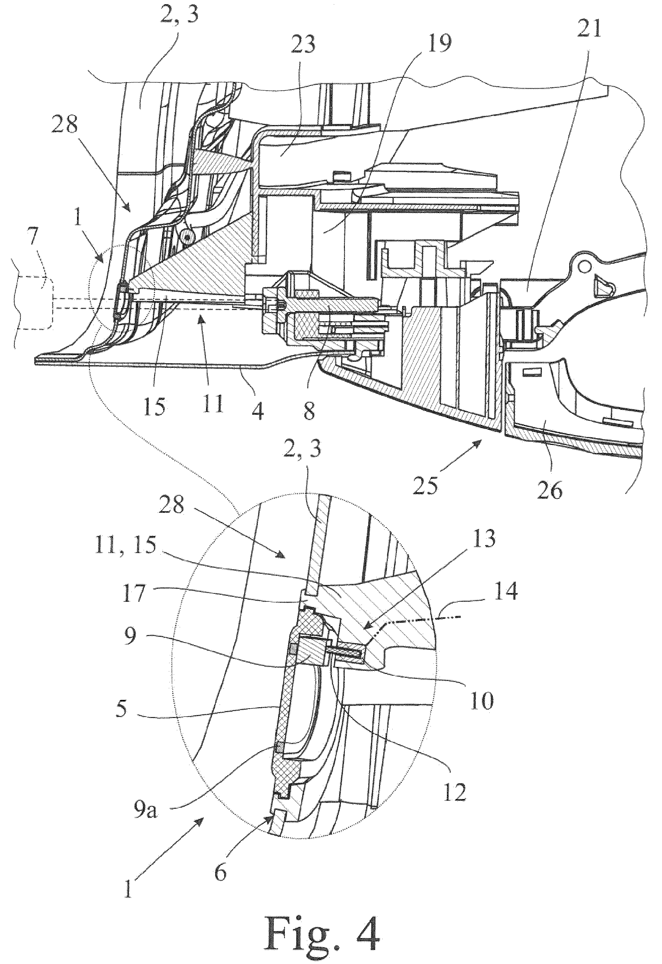

Für die Festlegung des Versorgungsteils 11 hinsichtlich seiner Lage zu der Werkzeugzugangsöffnung 6 sind verschiedene vorteilhafte Varianten denkbar. Bei der in Fig. 4 gezeigten Variante weist das Versorgungsteil 11 für seine Festlegung hinsichtlich seiner Lage zu der Werkzeugzugangsöffnung 6 einen Befestigungsabschnitt 17 auf, der hier und vorzugsweise formschlüssig mit dem Rand 6a der Werkzeugzugangsöffnung 6 in Eingriff steht oder bringbar ist. Dieser Eingriff ist vorteilhafterweise ein abdichtender Eingriff. Weiter vorzugsweise lässt sich mit dem Befestigungsabschnitt 17 eine Rastverbindung zwischen Versorgungsteil 11 und Werkzeugzugangsöffnung 6 erzeugen.

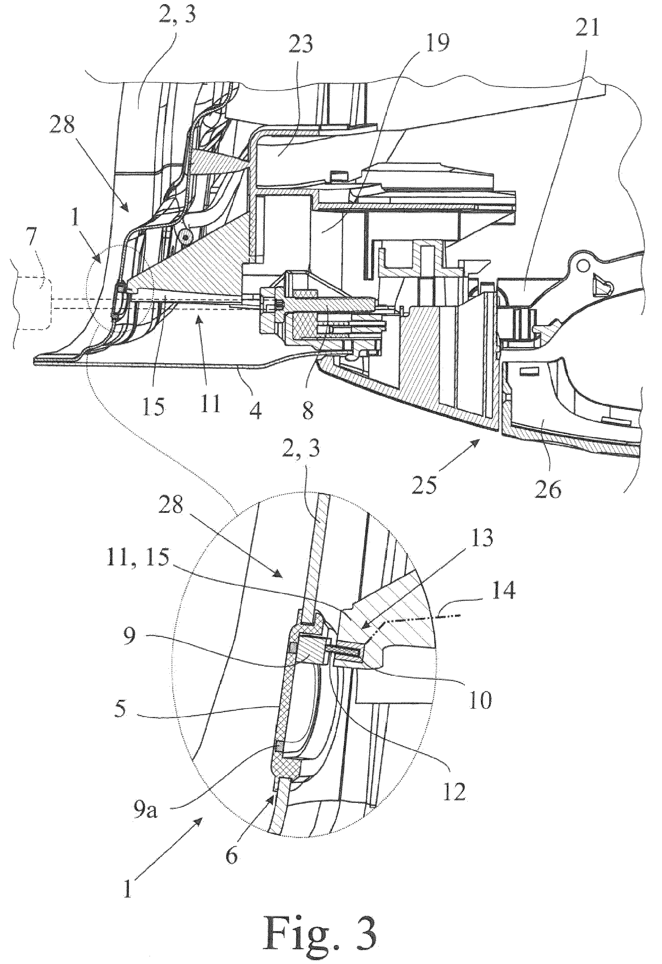

Alternativ oder zusätzlich kann es vorgesehen sein, dass das Versorgungsteil 11 für seine Festlegung hinsichtlich seiner Lage zu der Werkzeugzugangsöffnung 6 an einem Multifunktionsträger 18 angeordnet ist (Fig. 2, 3). Ein solcher Multifunktionsträger 18 weist ein Aufnahmeteil 19 auf, das verschiedene Türfunktionsmodule der Kraftfahrzeugtür 2, hier ein Fensterhebermodul 23, ein Schlossmodul 22 und ein Türgriffmodul 20 aufnimmt. Hier und vorzugsweise ist das Fensterhebermodul 23 einstückig mit dem Aufnahmeteil 19 verbunden, kann aber grundsätzlich lösbar mit dem Aufnahmeteil 19 verbunden sein. Der Multifunktionsträger 18 wird in einem derart vormontierten Zustand in die Kraftfahrzeugtür 2 eingesetzt, so dass mit einem einzigen Montagevorgang die verschiedenen Türfunktionsmodule der Kraftfahrzeugtür platziert werden können. Alternativ oder zusätzlich kann es weiter vorgesehen sein, dass das Versorgungsteil 11 für seine Festlegung hinsichtlich seiner Lage zu der Werkzeugzugangsöffnung 6 an irgendeiner anderen Anbaukomponente, insbesondere an dem Türgriffmodul 20, angeordnet ist.

Bei der in den Fig. 2 und 3 dargestellten, bevorzugten Ausführungsform steht das Abdeckteil 5 in befestigendem Eingriff mit dem Rand 6a der Werkzeugzugangsöffnung 6. Mit dem Versorgungsteil 11 ist das Abdeckteil 5 lediglich über die Steckverbindung 13 gekoppelt. Die für die Herstellung der Steckverbindung 13 erforderliche Festlegung des Versorgungsteils 11 wird hier und vorzugsweise ausschließlich über den Befestigungsabschnitt 24 bereitgestellt. Der Befestigungsabschnitt 24 stellt bei dem dargestellten und insoweit bevorzugten Ausführungsbeispiel eine Befestigung des Versorgungsteils 11 an dem Aufnahmeteil 19 des Multifunktionsträgers 18 bereit. Hier ist es vorzugsweise vorgesehen, dass sich mit dem Befestigungsabschnitt 24 eine Rastverbindung zwischen Versorgungsteil 11 und Multifunktionsträger 18 erzeugen lässt. Denkbar ist aber auch eine einstückige Ausgestaltung von Aufnahmeteil 19 und Versorgungsteil 11, wie weiter unten erläutert wird.

Bei einer weiteren, in Fig. 4 dargestellten Ausführungsform ist es so, dass das Abdeckteil 5, hier und vorzugsweise ausschließlich, an dem Versorgungsteil 11 befestigt ist. Dabei steht das Versorgungsteil 11 wie oben erläutert seinerseits in befestigendem Eingriff mit dem Rand 6a der Werkzeugzugangsöffnung 6. Das Abdeckteil 5 steht in einer besonders bevorzugten Ausgestaltung nicht nur befestigend, sondern auch abdichtend, in Eingriff mit dem Versorgungsteil 11.

Nach einer weiteren Lehre, der eigenständige Bedeutung zukommt, wird ein oben angesprochener Multifunktionsträger 18 als solcher beansprucht. Der Multifunktionsträger 18 weist wie oben angesprochen ein Aufnahmeteil 19 auf, das mindestens ein Türfunktionsmodul, hier und vorzugsweise ein Türgriffmodul 20, ein Schlossmodul 22 und/oder ein Fensterhebermodul 23 aufnimmt.

Wesentlich ist nun, dass das Aufnahmeteil 19 zusätzlich das oben angesprochene Versorgungsteil 11 einer vorschlagsgemäßen Funktionsanordnung 1 aufnimmt. Dabei kann das Versorgungsteil 11 unmittelbar mit dem Aufnahmeteil 19 in Eingriff stehen, wie in Fig. 3 gezeigt ist. Alternativ oder zusätzlich kann das Versorgungsteil 11 aber auch an einem der Türfunktionsmodule, die ihrerseits mit dem Aufnahmeteil 19 unmittelbar in Eingriff stehen, befestigt sein. Interessant ist nach der weiteren Lehre insgesamt, dass mit dem Einsetzen des Multifunktionsträgers 18 gleichzeitig auch das Versorgungsteil 11 der Funktionsanordnung 1 platziert wird, so dass anschließend ein Werkzeug 7 durch die Werkzeugzugangsöffnung 6 eingeführt werden kann und schließlich die Werkzeugzugangsöffnung 6 mittels des Abdeckteils 5, bei gleichzeitiger Herstellung der Steckverbindung 13, verschlossen werden kann.

In besonders bevorzugter Ausgestaltung ist zumindest ein Teil des Versorgungsteils 11, insbesondere der Trägerkörper 15, einstückig mit dem Multifunktionsträger 18 im Übrigen, insbesondere mit dem Aufnahmeteil 19, ausgestaltet. Dies lässt sich besonders einfach dadurch realisieren, dass zumindest ein Teil des Versorgungsteils 11, insbesondere der Trägerkörper 15, im Kunststoff-Spritzgießverfahren an den Multifunktionsträger 18 im Übrigen, insbesondere an das Aufnahmeteil 19, angespritzt ist.

Das Türgriffmodul 20 ist hier und vorzugsweise als Lagerbügel 21 ausgestaltet, das Bestandteil einer Türgriffanordnung 25 ist. Die Türgriffanordnung 25 weist neben dem Lagerbügel 21 weitere Komponenten, insbesondere einen Türgriff 26, auf, der an dem Lagerbügel 21 montiert ist. Die Werkzeugzugangsöffnung 6 liegt hier und vorzugsweise in einer Flucht mit einem Befestigungselement, hier und vorzugsweise eines schraubenartigen Befestigungselements 8, an der Türgriffanordnung 25. Das Befestigungselement 8 ist mittels eines in die Werkzeugzugangsöffnung 6 eingeführten Werkzeugs 7, hier und vorzugsweise eines Schraubendrehers, verstellbar. Dies wurde weiter oben bereits erläutert. Der Begriff "in einer Flucht" ist hier weit zu verstehen und bedeutet, dass zwischen der Werkzeugzugangsöffnung 6 und des Befestigungselements 8 ein länglicher Freiraum vorgesehen ist, so dass das ebenfalls längliche Werkzeug 7 das Befestigungselement 8 ungehindert erreichen kann.

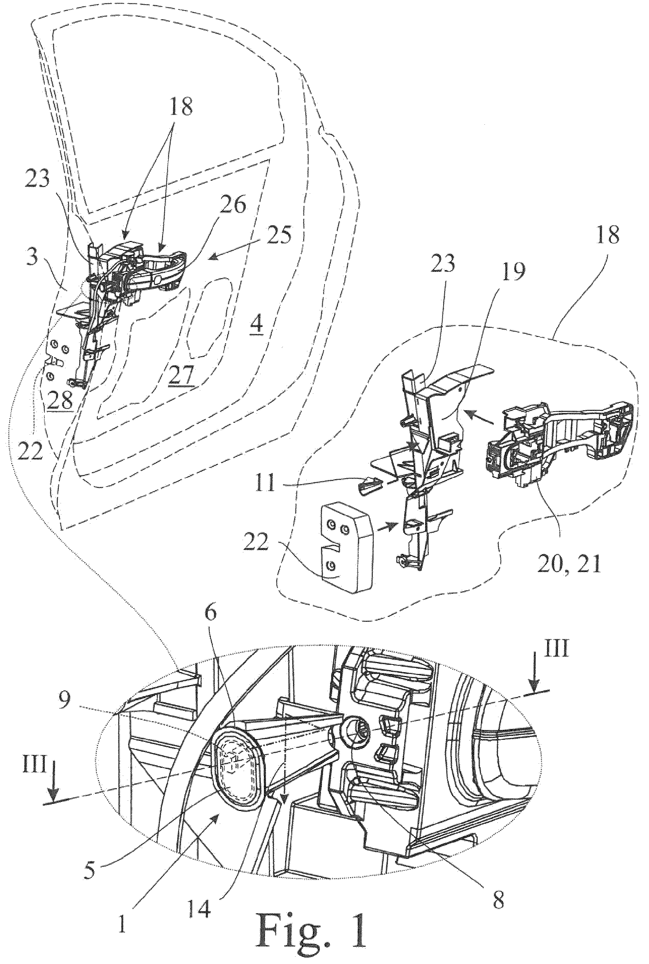

Nach einer weiteren Lehre, der ebenfalls eigenständige Bedeutung zukommt, wird die Kraftfahrzeugtür 2 mit einer Türgriffanordnung 25, die ein oben angesprochenes Türgriffmodul 20 aufweist, mit einer Werkzeugzuführungsöffnung 6 für die Montage der Türgriffanordnung 26 und mit einer der Werkzeugzugangsöffnung 6 zugeordneten, vorschlagsgemäßen Funktionsanordnung 1 beansprucht. Besonders vorteilhaft ist bei einem Blick auf Fig. 1, dass für die Realisierung der Beleuchtungseinheit 9 keine zusätzliche Öffnung im Türblech vorgesehen sein muss, da die Werkzeugzugangsöffnung 6 für die Platzierung der Beleuchtungseinheit 9 genutzt wird.

Fig. 1 zeigt, dass die Kraftfahrzeugtür 2 eine Türaußenhaut 27 und eine im Wesentlichen quer zu der Türaußenhaut 27 angeordnete Stirnseite 28 der Kraftfahrzeugtür 2 aufweist, wobei die Werkzeugzugangsöffnung 6 an der Stirnseite 28 der Kraftfahrzeugtür 2 angeordnet ist. Bei der Stirnseite handelt es sich vorzugsweise um die Seite der Kraftfahrzeugtür 2, an der das Schlossmodul 22 angeordnet ist.

In Abhängigkeit von der Funktion der Beleuchtungseinheit 9 kann die Beleuchtungseinheit 9 in ganz unterschiedliche Richtungen abstrahlen. Hier und vorzugsweise ist es so, dass die Beleuchtungseinheit 9 in eine fahrzeugrückwärtige Richtung und/oder in Richtung einer Fahrbahn abstrahlt.

Die einzelnen Komponenten der Kraftfahrzeugtür 2 können grundsätzlich separat montiert sein. Vorzugsweise ist allerdings ein oben angesprochener Multifunktionsträger 18 vorgesehen, der unter anderem das Versorgungsteil 11 der Funktionsanordnung 1 trägt. Die hiermit verbundenen Vorteile wurden weiter oben erläutert.

Der energietechnische, insbesondere elektrische Anschluss der Beleuchtungseinheit 9 ist bei dem dargestellten und insoweit bevorzugten Ausführungsbeispiel so vorgesehen, dass die Beleuchtungseinheit 9 über das Schlossmodul 22 mit Energie versorgt wird oder zumindest über das Schlossmodul 22 angesteuert wird. Dies ist sachgerecht, da in dem Schlossmodul 22 regelmäßig eine Shaltanordnung vorgesehen ist, die beim Öffnen der Kraftfahrzeugtür 2 eine Änderung ihres Schaltzustands vornimmt. Eine solche Schaltanordnung weist regelmäßig mindestens ein Schaltelement auf, das auch als "Ajar"-Schaltelement bezeichnet wird. Die energietechnische, insbesondere elektrische Verbindung des mindestens einen Energieleiters 14 am Versorgungsteil 11 mit der Schaltanordnung des Schlossmoduls 22 ist über mindestens einen weiteren Energieleiter vorgesehen. In besonders bevorzugter Ausgestaltung ist der mindestens eine weitere Energieleiter in das Aufnahmeteil 19 des Multifunktionsträgers 18 im Kunststoff-Spritzgießverfahren eingespritzt.

Nach einer weiteren Lehre, der ebenfalls eigenständige Bedeutung zukommt, wird ein Verfahren zur Montage einer vorschlagsgemäßen Funktionsanordnung 1 beansprucht. Wesentlich dabei ist die Tatsache, dass mit dem Verschließen der Werkzeugzugangsöffnung 6 durch das Abdeckteil 5 gleichzeitig eine Steckverbindung 13 zwischen dem Anschlussstecker 10 des Abdeckteils 5 und dem Gegenanschlussstecker 12 des Versorgungsteils 11 hergestellt wird. Die hiermit verbundenen Vorteile, insbesondere die Reduzierung von Verfahrensschritten, wurden weiter oben erläutert.

Bei dem vorschlagsgemäßen Verfahren ist es, wie oben angesprochen, vorzugsweise so, dass vor dem Verschließen der Werkzeugzugangsöffnung 6 mittels eines durch die Werkzeugzugangsöffnung 6 eingeführten Werkzeugs 7 eine obige Türgriffanordnung 25, insbesondere ein Türgriffmodul 20 in Form eines Lagerbügels 21 der Türgriffanordnung 25 montiert wird. Auf alle obigen Ausführungen, die geeignet sind, das vorschlagsgemäße Verfahren zu erläutern, darf verwiesen werden.

## Patentansprüche

1. Funktionsanordnung für eine Kraftfahrzeugtür (2), mit einem Abdeckteil (5) zum Verschließen einer Werkzeugzugangsöffnung (6) in der Kraftfahrzeugtür (2), wobei das Abdeckteil (5) eine Beleuchtungseinheit (9) und einen Anschlussstecker (10) zur Energieversorgung der Beleuchtungseinheit (9) aufweist, wobei ein Versorgungsteil (11) mit einem Gegenanschlussstecker (12) vorgesehen ist und wobei das Versorgungsteil (11) in seinem montierten Zustand hinsichtlich seiner Lage zu der Werkzeugzugangsöffnung (6) festgelegt ist und das Verschließen der Werkzeugzugangsöffnung (6) mit der Herstellung einer Steckverbindung (13) zwischen dem Anschlussstecker (10) des Abdeckteils (5) und dem Gegenanschlussstecker (12) des festgelegten Versorgungsteils (11) einhergeht und dadurch die Beleuchtungseinheit (9) über das Versorgungsteil (11) mit Energie versorgbar ist.

2. Funktionsanordnung nach Anspruch 1, **dadurch gekennzeichnet, dass** das Versorgungsteil (11) einen Trägerkörper (15) für mindestens einen Energieleiter (14) aufweist, vorzugsweise, dass der Energieleiter (14) mindestens einen elektrischen Leiter und/oder mindestens einen Lichtwellenleiter aufweist.

3. Funktionsanordnung nach Anspruch 1 oder 2, **dadurch gekennzeichnet, dass** der Trägerkörper (15) als Führung für ein durch die Werkzeugzugangsöffnung (6) hindurchragendes Werkzeug (7) ausgebildet ist, vorzugsweise, dass der Trägerkörper (15) zumindest zum Teil trichterförmig ausgestaltet ist.

4. Funktionsanordnung nach einem der vorhergehenden Ansprüche, **dadurch gekennzeichnet, dass** die Steckverbindung (13) zwischen dem Anschlussstecker (10) des Abdeckteils (5) und dem Gegenanschlussstecker (12) des Versorgungsteils (11) eine wasserdichte Steckverbindung ist.

5. Funktionsanordnung nach einem der vorhergehenden Ansprüche, **dadurch gekennzeichnet, dass** der Gegenanschlussstecker (12) des Versorgungsteils (11) im montierten Zustand im Randbereich der Werkzeugzugangsöffnung (6) angeordnet ist.

6. Funktionsanordnung nach einem der vorhergehenden Ansprüche, **dadurch gekennzeichnet, dass** für seine Festlegung hinsichtlich seiner Lage zu der Werkzeugzugangsöffnung (6) das Versorgungsteil (11) einen Befestigungsabschnitt (17) aufweist, der in Eingriff mit der Werkzeugzugangsöffnung (6) steht, und/oder, dass für seine Festlegung hinsichtlich seiner Lage zu der Werkzeugzugangsöffnung (6) das Versorgungsteil (11) an einer Anbaukomponente der Kraftfahrzeugtür (2) und/oder an einem Multifunktionsträger (18) befestigt ist.

7. Funktionsanordnung nach einem der vorhergehenden Ansprüche, **dadurch gekennzeichnet, dass** das Abdeckteil (5), insbesondere ausschließlich, an dem Versorgungsteil (11) befestigt ist.

8. Multifunktionsträger mit einem Aufnahmeteil (19), das mindestens ein Türfunktionsmodul, vorzugsweise ein Türgriffmodul (20), ein Schlossmodul (22) und/oder ein Fensterhebermodul (23), sowie das Versorgungsteil (11) einer Funktionsanordnung (1) nach einem der vorhergehenden Ansprüche aufnimmt.

9. Multifunktionsträger nach Anspruch 8, **dadurch gekennzeichnet, dass** zumindest ein Teil des Versorgungsteils (11) einstückig mit dem Multifunktionsträger (18) im Übrigen, insbesondere mit dem Aufnahmeteil (19), ausgestaltet ist, vorzugsweise, dass zumindest ein Teil des Versorgungsteils (11) im Kunststoff-Spritzgießverfahren an den Multifunktionsträger (18) im Übrigen, insbesondere an das Aufnahmeteil (19), angespritzt ist.

10. Kraftfahrzeugtür mit einer Türgriffanordnung (25), mit einer Werkzeugzuführungsöffnung (6) für die Montage der Türgriffanordnung (25) und mit einer der Werkzeugzugangsöffnung (6) zugeordneten Funktionsanordnung (1) nach einem der Ansprüche 1 bis 7.

11. Kraftfahrzeugtür nach Anspruch 10, **dadurch gekennzeichnet, dass** die Türgriffanordnung (25) einen Lagerbügel (21) und einen an dem Lagerbügel (21) montierten Türgriff (26) aufweist und dass die Werkzeugzugangsöffnung (6) in einer Flucht mit einem Befestigungselement (8), insbesondere einem schraubenartigen Befestigungselement (8), an der Türgriffanordnung (25) liegt, das mittels eines in die Werkzeugzugangsöffnung (6) eingeführten Werkzeugs (7), insbesondere eines Schraubendrehers, verstellbar ist.

12. Kraftfahrzeugtür nach einem der Ansprüche 10 oder 11, **dadurch gekennzeichnet, dass** die Kraftfahrzeugtür (2) eine Türaußenhaut (27) und eine im Wesentlichen quer zu der Türaußenhaut (27) angeordnete Stirnseite (28) der Kraftfahrzeugtür (2) aufweist und dass die Werkzeugzugangsöffnung (6) an der Stirnseite (28) der Kraftfahrzeugtür (2) angeordnet ist.

13. Kraftfahrzeugtür nach einem der Ansprüche 10 bis 12, **dadurch gekennzeichnet, dass** die Beleuchtungseinheit (9) in eine fahrzeugrückwärtige Richtung und/oder Richtung einer Fahrbahn abstrahlt.

14. Kraftfahrzeugtür nach einem der Ansprüche 10 bis 13, **dadurch gekennzeichnet, dass** ein Multifunktionsträger (18) nach Anspruch 8 oder 9 vorgesehen ist.

15. Verfahren zur Montage einer Funktionsanordnung (1) nach einem der Ansprüche 1 bis 7, wobei mit dem Verschließen der Werkzeugzugangsöffnung (6) gleichzeitig eine Steckverbindung (13) zwischen dem Anschlussstecker (10) des Abdeckteils (5) und dem Gegenanschlussstecker (12) des Versorgungsteils (11) hergestellt wird.

16. Verfahren nach Anspruch 15, **dadurch gekennzeichnet, dass** vor dem Verschließen der Werkzeugzugangsöffnung (6) mittels eines durch die Werkzeugzugangsöffnung (6) eingeführten Werkzeugs (7) eine Türgriffanordnung (25) montiert wird.
